# EUROPEAN PATENT APPLICATION

(11) **EP 2 755 372 A1**
(43) Date of publication of application: **16.07.2014**
(21) Application number: 13250005.9
(22) Date of filing: 11.01.2013
(51) Int. Cl.: H04M 3/42, H04M 3/38, H04M 3/436, H04M 7/00

(54) **Validating communications**

(71) Applicant: British Telecommunications public limited company, London EC1A 7AJ (GB)
(72) Inventor: The designation of the inventor has not yet been filed
(74) Representative: Lau, Chi-Fai

(57) **Abstract**

The present invention provides a method of validating a communications session, such as a telephone call, between a calling party and a called party. Such a method should prevent called parties from being the victims of `spoof' calls, which can lead to identity theft. The method may involve the use of a trusted third party or the generation of a time-based one time password based on a shared key.

## Description

The present method relates to a method of communication and in particular to a method of validating a communication between a calling party and a called party, possibly via a third party.

In order to ensure that a company is speaking to a particular customer a telephone agent will ask a number of security questions to the customer. The agent will then only to proceed to discuss the account details with the customer if the customer is able to answer the security questions in a satisfactory manner. However, there is no effective way for the customer to be sure that the telephone agent is actually calling from the company that they purport to represent. It may be possible for the customer to check the telephone number presented by the company, using a calling line identification (CLI) system, with the telephone number shown on the company's literature but it is relatively easy to spoof CLI data.

According to a first aspect of the present invention there is provided a method of validating a communications session between a calling party and a called party the method comprising the steps of: a) an intermediary party receiving from the calling party (100) an intention to call the called party; b) in response to the calling party receiving a call from the called party, the intermediary party receiving a validation request from the called party; c) the intermediary party comparing the validation request received from the called party with the intention to call the called party received from the calling party; d) the intermediary party sending a confirmation to the called party if the call received from the calling party matches one or more parameters comprised in the intention to call the called party.

One or more parameters comprised in the intention to call the called party may comprise one or more of: the calling line identity of the calling party; the date of the call; or a time period within which the call is to be made.

The intermediary party may acknowledge the receipt of the intention to call received from the calling party after the completion of step a) such that the calling party will not call the called party until the acknowledgment has been received. The called party will only accept the call from the calling party if in step d) the intermediary party confirms that the call is from the calling party. If not, then the call may be rejected.

The intermediary party may receive a confirmation that the call with the called party has been terminated from the calling party. Subsequent to receiving this confirmation, the intermediary party may delete the intention to call.

According to a second aspect of the present invention there is provided a method of validating a communications session between a calling party and a called party, the method comprising the steps of: a) generating a key, such the key is made available to the calling party and the called party; b) in response to the calling party initiating a call to the calling party, the calling party generating a first verification token and the called party generating a second verification token, the first and second verification tokens being generated in accordance with the key generated in step a); and c) the calling party accepting the call from the called party if the first verification token is identical to the second verification token.

The invention will now be further described, by way of example only, and with reference to the following drawings in which:
Figure 1 shows a schematic depiction of calling party, a called party and a third party;
Figure 2 shows a flowchart detailed the execution of a method according to a first embodiment of the present invention; and
Figure 3 shows a flowchart detailed the execution of a method according to a second embodiment of the present invention.

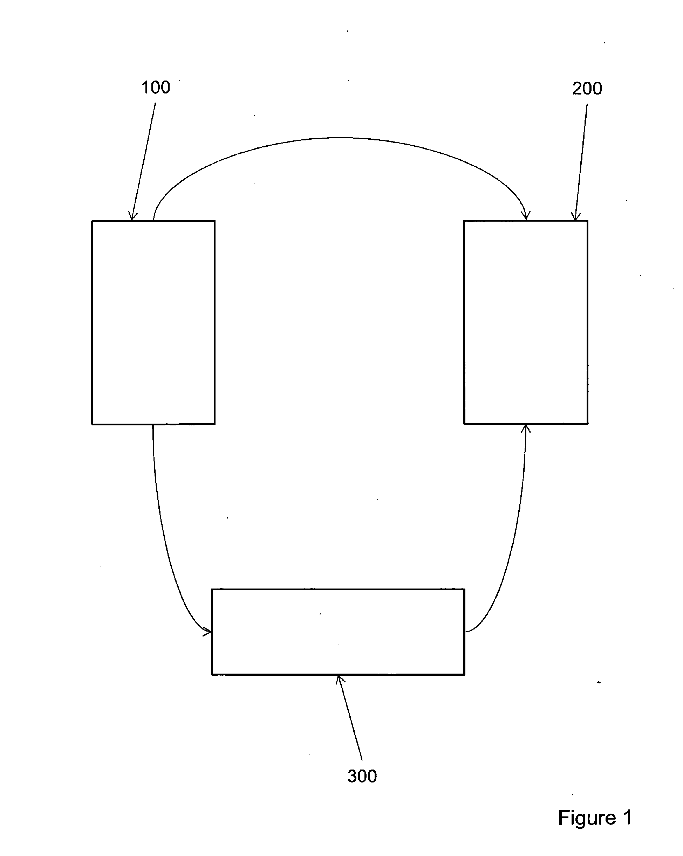

Figure 1 shows a schematic depiction of calling party 100, called party 200 and third party 300. If the calling party 100 calls the called party 200 directly then the called party is not able to effectively validate the identity of the calling party. Alternatively, if the call is made via a third party 300 then, both the calling party 100 and the called party 200 must trust the third party to act in a reputable manner. It is also necessary that the third party has trust in the calling party, as if the third party is not able to successfully verify calls from the calling party then it may authorise or enable spoof calls to made to the called party. However, routing calls directly via a third party may provide further opportunities for spoof calls to be made to a called party. The present invention provided a further method which avoids the disadvantages associated with known techniques.

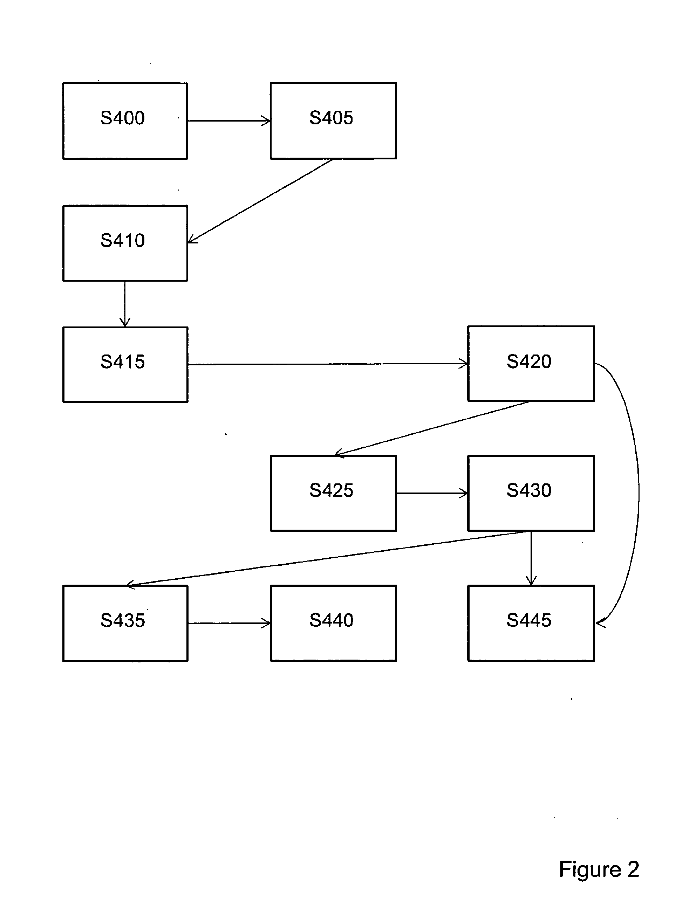

Figure 2 shows a flowchart detailed the execution of a method according to a first embodiment of the present invention. Referring to Figure 2, the process boxes in the left-hand column are associated with the calling party 100, the process boxes in the central column are associated with the third party 300 and the process boxes in the right-hand column are associated with the called party 200. Before the commencement of the process described with regard to Figure 2, the calling party will already have established a relationship with the third party and will have demonstrated their identity to the third party.

At step S400 the calling party will communicate an intention to call the called party to the third party. This will be communicated via some secure channel so that the intention to call cannot be intercepted or interfered with by a potential attacker. The intention to call may specify the date and a time window within which the call will be made. The third party will record the intention to call in a database at S405 and send an acknowledgement to the calling party (S410). Subsequent to the third party acknowledging that the intention to call has been received, the calling party initiates a call (S415) to the called party. The call may be as soon as the acknowledgement is received by the calling party or it may be necessary to wait until the time window specified within the intention to call and/or for a telephone agent to be available to handle the call.

When the called party receives the call it will attempt to initiate a verification process (S420, see below for more details). If the called party is not able to take part in the verification process, and thus it is not completed, then the call is terminated and the process ends at S445. Alternatively, if the called party does not have the capability to verify the identity of the calling party then the caller may be presented with the call and is left to determine the identity if the calling party based solely on the presented CLI data.

As a part of the verification process the called party makes contact with the third party to validate the call against the intention to call registered by the calling party. The third party will respond to the called party (S425); if the call from the calling party matches a valid intention to call then the third party will advise the called party that the call is from the calling party and then the called party may choose to accept the call (S430). If the call is accepted the calling party will, after the call has been ended, report the call to the third party (S435) so that the call can be logged and the associated intention to call can be removed from the appropriate database (S440). Furthermore, if the end of the call is not logged within a predetermined period of time, for example 1 hour, then the intention to call may be removed from the database to prevent it from being used again, either by the calling party or a potential attacker. If when the called party attempts to validate the identity of the calling party there is no recorded intention to call then it can be inferred that the attempted call is not *bona fide:* the third party can inform the called party of this fact and ensure that the call is not placed. Any network data regarding such an attempted spoof call may be passed on to the calling party which has been impersonated to enable any pattern of such calls to be determined.

It will be understood that the verification of the call may be implemented in a number of different ways. For example, an SMS text message may be sent to the called party which comprises the calling party's name, CLI data, and/or further telephone numbers. The called party could then text or call to the third party to confirm that a valid intention to call exists for that called party. When validation is received then the call may be placed to the called party.

Alternatively, the third party could provide an app to be executed by a smartphone. When a call is received from the calling party, the app would present CLI data, calling party name and/or logos to the user, who could then send a request, using a secure channel (for example HTTPS), to the third party to allow the intention to call to be validated. Once the validation has been received then it would be possible for the call to be placed, as described above.

A yet further option would be for the called party to call the third party using a second telephone line (if present) and for an interactive voice response system (or a human agent) to present the details of the calling party and to determine the response of the called party. If it is not possible to verify the calling party using the method described above with reference to Figure 1 then the called party may choose to accept the call, Alternatively, if the third party wishes to protect their reputation they may only allow calls to be placed between the calling party and the called party if the called party is able to validate the calling party.

Ideally the called party's telephone should not start ringing until a response has been received from the third party such that the called party can make an informed decision about answering the call, but this may not be possible in all circumstances.

It is known to use time-based one time passwords (TOTPs) in "2-step verification" logins, for example to provide additional security for online banking. Both the time and a key are used to create a hash value. This means that there is no need for a connection between the 2 parties, and at any given moment each will generate the same password. The passwords are generated using a shared secret and a time based algorithm. The key is something that remains static each time the password is generated, and must be known by both parties otherwise the correct password cannot be generated. In order to take into account slight fluctuations in time between the two parties the time value used when generating the hash is determined for a predetermined period of time, for example 30 seconds, and the password will be valid for this period of time. By hashing the secret and time interval a password can be generated that can be used to verify that both parties are who they say they are (i.e. have the correct secret). The device that generates the key can either be implemented in software, for example in a smartphone app or built into call centre software, or in hardware.

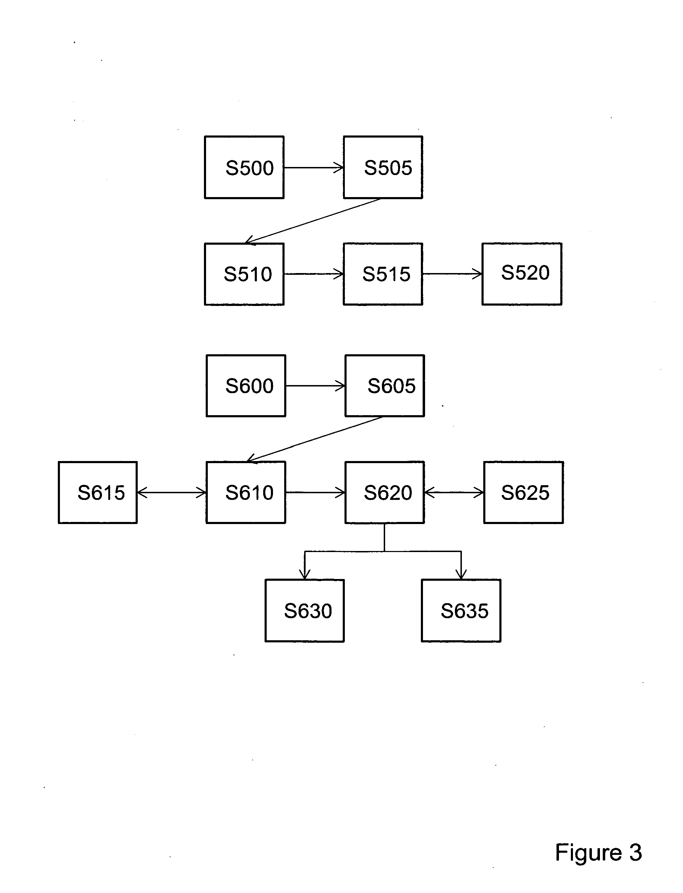

Figure 3 shows a flowchart detailed the execution of a method according to a second embodiment of the present invention. Initially there is a set-up stage of the process, which is shown in steps S500-S520. Once this set-up stage is complete then it is not necessary to repeat it and steps S600-S635 describe the operation of the method when it is being used to validate the identity of a calling party.

At step S500 the calling party will contact a potential called party and invite the called party to use a TOTP verification system. The calling party may send a hardware device to the customer or may send a link that enables the called party to register and download software, for example an app for a smartphone, which allows the use a TOTP verification system. At S505 the called party will respond to the invitation and register to use the use a TOTP verification system. Following the registration of a potential called party the calling party will generate a secret key for use within the TOTP verification system (S510) and transmit this key to the potential called party (S515). The potential called party will then store the secret key, either within a hardware device or within a computer program. The TOTP verification system is now ready for use.

When the calling party calls the party (S600), the called party can request that the calling party validates their identity through the use of the TOTP verification system (S605). The calling party agent will generate a TOTP (S610), based on the secret key associated with the respective called party, for example by using a computer program integrated the call centre software which is used by the calling party agent. The TOTP is returned to the calling party agent (S615) and is then communicated to the called party. The called party will also generate a TOTP (S625) and at S620 the called party will compare the two TOTPs. If they are identical then they must have been generated on the basis of the same secret key and thus the called party can be confident that the call is originating from the calling party and the called party may choose to continue the call (S630). If there is not a match then it is likely that the call is not originating from the calling party and thus there is a strong probability that the call is a spoof call: in such a case the called party is likely to end the call at S635.

In an alternative, the secret key may be provided by the potential called party to the calling party, or both parties may provide a portion of the secret key. It will be understood that a number of different implementations of the verification system are possible. For example, in the case of a smartphone app-based system, the app may detect the CLI of the calling party and will initiate a calculation of the TOTP when the call is first received without any explicit action being taken by the called party. The calling agent may read out the TOTP to the called party, allowing the user to check that the spoken TOTP matches that generated by the app on their smartphone. Alternatively, the TOTP may be sent to the app via a secure channel such that the user received an indication on the screen that the TOTPs are identical. This may be achieved by showing both of the TOTPs together on the screen so that the user can determine that they are identical. Alternatively, a simple confirmation system may be provided, for example green light for a match between the two TOTPS or a red light for different TOTPs.

If the called party is using a conventional telephone without the ability to execute such an app, then it may be convenient to use a hardware-based system, for example such an RSA SecureID tag. The secret key may be hardcoded within the tag, or alternatively it may be provided to the user on a chip mounted on a card, similar to a bank or credit card. If the called party has a tablet computer then an app may be run on the computer, with the calling party using a secure channel to send the TOTP to the called party (as described above) for verification.

## Claims

1. A method of validating a communications session between a calling party (100) and a called party (200), the method comprising the steps of:
a) an intermediary party (300) receiving from the calling party (100) an intention to call the called party (200);
b) in response to the calling party receiving a call from the called party, the intermediary party receiving a validation request from the called party;
c) the intermediary party comparing the validation request received from the called party with the intention to call the called party received from the calling party;
d) the intermediary party sending a confirmation to the called party if the call received from the calling party matches one or more parameters comprised in the intention to call the called party.

2. A method according to Claim 1 wherein the one or more parameters comprised in the intention to call the called party may comprise one or more of: the calling line identity of the calling party; the date of the call; or a time period within which the call is to be made.

3. A method according to Claim 1 or Claim 2, wherein the intermediary part will acknowledge the receipt of the intention to call received from the calling party, the acknowledgement being sent to the calling party after the completion of step a) such that the calling party will not call the called party until the acknowledgment has been received.

4. A method according to any preceding Claim, wherein the called party will only accept the call from the calling party if in step d) the intermediary party confirms that the call is from the calling party.

5. A method according to any of Claims 1 to 4 where the called party will not accept the call from the calling party if the intermediary party does not confirm that the call is from the calling party.

6. A method according to Claim 4, wherein the intermediary party receives a confirmation that the call with the called party has been terminated from the calling party.

7. A method according to Claim 6, wherein the intermediary party deletes the intention to call after the receipt of the confirmation of the call termination.

8. A method of validating a communications session between a calling party (100) and a called party (200), the method comprising the steps of:
a) generating a key, such the key is made available to the calling party and the called party;
b) in response to the calling party initiating a call to the calling party, the calling party generating a first verification token and the called party generating a second verification token, the first and second verification tokens being generated in accordance with the key generated in step a); and
c) the calling party accepting the call from the called party if the first verification token is identical to the second verification token.
